# DEMANDE DE BREVET EUROPEEN

(11) **EP 0 559 586 A1**
(43) Date de publication de la demande: **08.09.1993**
(21) Numéro de dépôt: 93420091.6
(22) Date de dépôt: 01.03.1993
(51) Int. Cl.: B23B 13/02, B23B 13/10, B23B 13/12

(54) **Embarreur pour tour**

(30) Priorité: 02.03.1992 FR 9202674
(71) Demandeur: BECHET FRERES (SOCIETE ANONYME), F-74300 Cluses (FR)
(72) Inventeur: Dufour, Claude, F-74300 Thyez (FR)
(74) Mandataire: Poncet, Jean-François

(57) **Abrégé**

L'embarreur selon l'invention comprend un guide-barre (1) formé de deux demi-coquilles séparables constituant un tube creux à paroi latérale continue, une poussette (2) montée à coulissement dans le guide-barre (1), un câble (5) flexible dont la première extrémité (7) est solidaire de la poussette (2) et dont la seconde extrémité (8) coulisse dans un tube guide câble de réserve (3). Une poulie (9), actionnée par un moteur, est associée à deux galets presseurs opposés (22, 23) et des galets de guidage (25) pour guider le câble (5) en demi-boucle entre le guide-barre (1) et le tube guide câble de réserve (3). Les galets presseurs (22, 23) peuvent être pressés contre la poulie (9) ou écartés de la poulie, par un vérin (30), pour embrayer ou débrayer le câble (5) par rapport à la poulie (9).

## Description

La présente invention concerne les dispositifs permettant d'alimenter un tour automatique, c'est-à-dire permettant d'amener dans la zone de travail du tour occupée par les outils l'extrémité d'une barre métallique à usiner.

Les embarreurs connus pour tour automatique comprennent généralement un guide-barre formé d'une première demi-coquille et d'une deuxième demi-coquille mobiles l'une par rapport à l'autre entre deux positions, à savoir une position fermée dans laquelle les deux demi-coquilles sont raprochées l'une de l'autre pour former un guide tubulaire creux, ouvert aux deux extrémités, et une position ouverte dans laquelle les demi-coquilles sont séparées l'une de l'autre pour permettre l'introduction latérale d'une barre dans le creux intérieur des demi-coquilles. Le guide-barre forme un tube creux dont la dimension intérieure est adaptée pour permettre le coulissement axial libre d'une barre à usiner.

Une poussette, en forme de cylindre métallique, est montée à coulissement dans le creux intérieur du guide-barre, et est sollicitée par des moyens mécaniques d'avance barre. Pour assurer l'actionnement en translation longitudinale de la poussette tout au long du guide-barre, le guide-barre est généralement pourvu d'une fente latérale traversée par un drapeau qui relie la poussette à un élément d'entraînement extérieur tel qu'une chaîne d'entraînement actionnée par un moteur. Le drapeau coulisse dans ladite fente du guide-barre lors du coulissement de la poussette.

Une telle disposition à guide-barre muni d'une fente pour le passage d'un drapeau d'entraînement est une structure acceptable pour des barres de diamètre suffisant, c'est-à-dire dont le rapport entre le diamètre de la barre et la largeur de la fente est assez grand pour que la fente ne constitue pas un moyen de coincement de la barre.

Par contre, pour l'usinage de barres de petit diamètre, notamment de diamètre inférieur à 2 millimètres environ, une structure à poussette entraînée par drapeau conduit à des risques importants de coincement de la barre dans la fente du guide-barre.

Par ailleurs, l'usinage de barres de petit diamètre entraîne assez souvent des difficultés d'approvisionnement en barres dans le guide-barre, lorsque l'on veut réaliser un approvisionnement automatique. En effet, les barres de petit diamètre sont particulièrement flexibles et de faible poids. Il en résulte que leur progression dans des guides d'approvisionnement est souvent perturbée par la déformation de la barre et par certaines adhérences de la barre sur les guides en présence d'huile ou d'autres produits de fonctionnement. Il apparaît alors des anomalies fréquentes de l'approvisionnement, produisant d'éventuels coincements de la barre dans le guide-barre.

Le document EP-A-0 161 210 décrit un embarreur comprenant une poussette entraînée par un câble désaxé auquel elle est reliée par un drapeau. Le guidage des barres est effectué par une série de paliers hydrostatiques répartis sur la longueur de l'embarreur et formant un moyen de guidage discontinu de la barre. Les paliers peuvent s'ouvrir ensemble pour l'introduction d'une barre, et peuvent s'ouvrir les uns après les autres pour le passage du drapeau. Une telle structure n'est pas non plus appropriée pour le guidage de barres de petit diamètre, car la barre peut alors flamber entre deux paliers hydrostatiques. En outre, un guidage discontinu n'est pas approprié pour un entraînement de poussette par câble coaxial, car le câble lui-même peut flamber.

Le document US-A-2 602 212, déposé en 1949, décrit un embarreur dans lequel la poussette est entraînée par un élément flexible de forme hélicoïdale coulissant dans le guide-barre et dans un tube de réserve parallèle au guide-barre principal. L'élément flexible hélicoïdal est entraîné par un pignon denté engrenant dans les interstices de l'élément hélicoïdal. Le guide-barre est un tube monobloc, qui pivote latéralement pour permettre l'introduction de la barre par l'avant de l'embarreur. Une telle structure n'est pas adaptée pour des barres de petit diamètre, dont l'introduction est alors très difficile par coulissement axial dans le tube guide-barre. En outre, la forme hélicoïdale de l'élément flexible introduit une usure non négligeable des tubes lors de son coulissement, et implique une variation de longueur importante lors des contraintes. Le pignon dentée d'entraînement est disposé au voisinage de l'extrémité antérieure du tube de guidage de réserve, et constitue un moyen d'entraînement inadapté pour un câble pousseur relativement lisse.

Le problème proposé par la présente invention est de concevoir une nouvelle structure d'embarreur qui permette, à la fois, une introduction latérale de la barre dans le tube du guide-barre, et un guidage efficace des barres de petit diamètre, c'est-à-dire de diamètre inférieur à 2 millimètres environ. L'entraînement des barres doit s'effectuer sans coincement, pendant toute la course d'usinage.

L'invention vise en outre à faciliter l'introduction et l'engagement de la barre dans la pince de poussette, ainsi que l'extraction de la chute hors du guide-barre en fin d'usinage.

La présente invention propose d'autre part une structure particulière de dispositif de sélection et d'amenée de barres dans le guide-barre, évitant les problèmes liés à la flexibilité et au faible poids des barres de petit diamètre.

Selon un autre objet de l'invention, la nouvelle structure de moyen d'entraînement de poussette est peu onéreuse, particulièrement fiable, et autorise sans usure excessive les rotations rapides et les vibrations de la barre dans le guide-barre.

Pour atteindre ces objets ainsi que d'autres, l'embarreur selon la présente invention comprend une structure similaire aux structures classiques avec guide-barre en deux demi-coquilles mobiles l'une par rapport à l'autre, et avec une poussette coulissant dans le creux intérieur du guide-barre. La poussette permet d'exercer une pression axiale sur l'arrière d'une barre introduite dans le guide-barre, pour pousser la barre en direction de la poupée de tour pour introduire son extrémité antérieure dans la broche de tour. Selon l'invention, en position fermée, les deux demi-coquilles du guide-barre sont étroitement appliquées l'une contre l'autre pour former un tube creux à paroi latérale continue, sans fente latérale, et de longueur suffisante pour contenir sensiblement toute la barre ; les moyens mécaniques d'avance barre comprennent un câble flexible dont une première extrémité est montée à coulissement axial dans le creux du guide-barre et est fixée à la poussette ; ladite poussette coulisse dans le guide-barre ; la deuxième extrémité du câble coulisse axialement dans un tube guide câble de réserve ; une portion intermédiaire de câble est entraînée axialement par des moyens d'entraînement, au voisinage de l'extrémité arrière du guide-barre opposée à la poupée de tour, entre ladite extrémité arrière de guide-barre et l'entrée du tube guide câble de réserve.

Les moyens d'entraînement du câble comprennent avantageusement une poulie de renvoi et au moins un galet presseur et de guidage entre lesquels passe le câble formant une demi-boucle entre les extrémités respectives du guide-barre et du tube guide câble de réserve ; des moyens moteurs entraînent en rotation la poulie de renvoi et/ou les galets presseurs, pour actionner la poussette.

Pour assurer la possibilité d'un entraînement de la barre et du câble par la poupée du tour lors de certaines étapes d'usinage, on prévoit un débrayage entre les moyens d'entraînement et le câble ; pour cela, les galets presseurs sont mobiles entre une position rapprochée dans laquelle ils pincent le câble radialement contre la poulie de renvoi, assurant alors l'entraînement du câble et de la poussette, et une position retirée dans laquelle ils restent à proximité de la poulie de renvoi pour assurer un guidage du câble tout en permettant le glissement du câble entre les galets et la poulie, de sorte que la broche de tour détermine alors la position axiale de la barre, de la poussette et du câble.

Une solution alternative consiste, pendant les étapes d'entraînement de barre par la broche de tour, à entraîner la poulie de renvoi selon un couple juste suffisant pour vaincre les forces de frottement et pour accompagner ainsi l'effort d'entraînement de barre produit par la broche de tour.

D'autres objets, caractéristiques et avantages de la présente invention ressortiront de la description suivante de modes de réalisation particuliers, faite en relation avec les figures jointes, parmi lesquelles :
- la figure 1 montre une vue de côté, en coupe longitudinale, d'un embarreur pour tour automatique selon la présente invention ;
- la figure 2 montre une vue de dessus de l'embarreur de la figure 1 ;
- la figure 3 est une vue schématique en perspective du câble d'entraînement de la poussette selon la présente invention ;
- la figure 4 est une vue en coupe transversale selon le plan A-A de la figure 1, en position guide-barre fermé ;
- la figure 5 est une coupe transversale selon le plan A-A de la figure 1 en position guide-barre ouvert ;
- la figure 6 est une vue de détail de côté du dispositif d'entraînement du câble selon l'invention ;
- la figure 7 est une vue de profil du dispositif de la figure 6 ;
- les figures 8 à 13 illustrent, en vue transversale, la structure et les étapes successives de fonctionnement d'un dispositif de sélection et d'alimentation en barres selon l'invention ;
- les figures 14 et 15 illustrent un autre mode de réalisation du guide-barre selon la présente invention ; et
- la figure 16 illustre un autre mode de réalisation des moyens d'entraînement du câble selon l'invention.

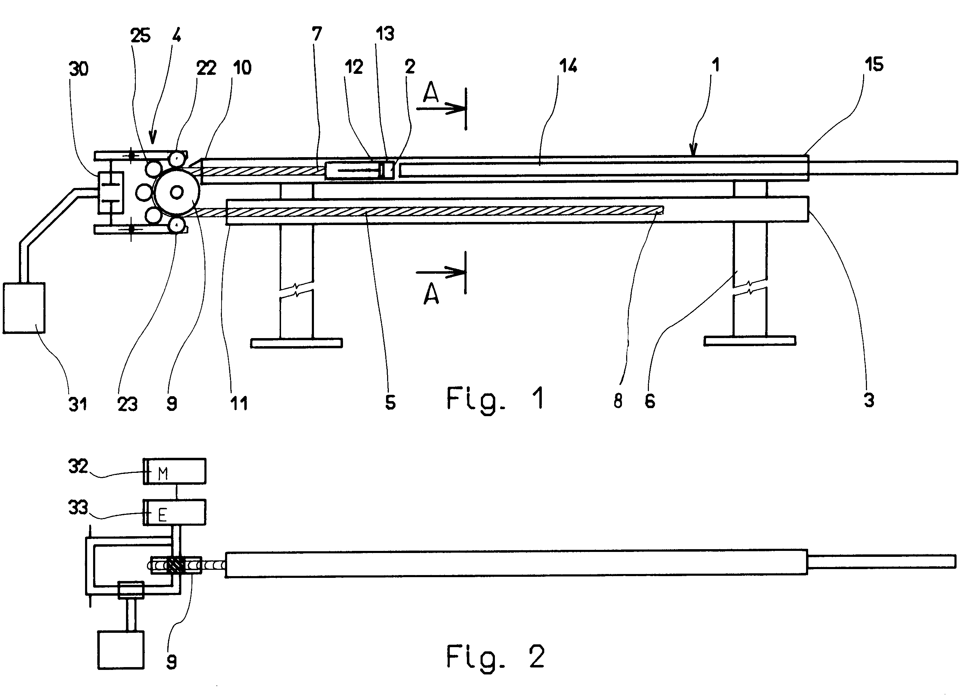

Comme le représentent les vues générales des figures 1 et 2, l'embarreur pour tour automatique selon l'invention comprend, dans le mode de réalisation représenté, un guide-barre 1 tubulaire creux, une poussette 2 montée à coulissement dans le guide-barre 1, un tube guide câble de réserve 3, des moyens mécaniques d'entraînement 4 et un câble flexible 5. L'ensemble est monté sur un bâti 6.

Le câble flexible 5 coulisse à la fois dans le tube guide câble de réserve 3 et dans le guide-barre 1, sa première extrémité 7 étant solidaire de la poussette 2, sa seconde extrémité 8 ou extrémité libre étant logée dans le tube guide câble de réserve 3. Une portion intermédiaire du câble 5 est sollicitée par les moyens d'entraînement 4, qui provoquent sa translation axiale dans le guide-barre 1 et dans le tube guide câble de réserve 3.

Pour diminuer l'encombrement de l'ensemble, le tube guide câble de réserve 3 est avantageusement disposé parallèlement au guide-barre 1, et les moyens d'entraînement 4 comprennent une poulie de renvoi 9 dont le diamètre est égal sensiblement à l'écartement entre le guide-barre 1 et le tube guide câble de réserve 3. La poulie 9 est disposée dans le plan formé par le guide-barre 1 et le tube guide câble de réserve 3, à proximité des extrémités respectives 10 du guide-barre 1 et 11 du tube guide câble de réserve 3.

La poussette 2 comprend une première partie 12, solidaire de l'extrémité 7 du câble 5, coulissant dans le guide-barre 1 sans rotation axiale. La première partie 12 est reliée à une seconde partie 13 de poussette par une articulation d'axe longitudinal autorisant la libre rotation axiale de la seconde partie 13 de poussette dans le guide-barre 1. La seconde partie 13 de poussette comprend en outre une partie en forme de pince de préhension pour s'adapter et agripper l'extrémité postérieure d'une barre 14 disposée dans le guide-barre 1 et destinée à être usinée par les outils du tour.

Le guide-barre 1 a une longueur suffisante pour contenir entièrement une barre 14 à usiner, la poussette 2 et une partie du câble 5. Le câble 5 a une longueur suffisante pour que son extrémité 8 reste en permanence introduite dans le tube guide câble de réserve 3 dans toutes les positions de la poussette 2 entre la première extrémité 10 du guide-barre 1 et seconde extrémité 15 du guide-barre 1. Pour cela, le tube guide câble de réserve 3 a sensiblement la même longueur que le guide-barre 1.

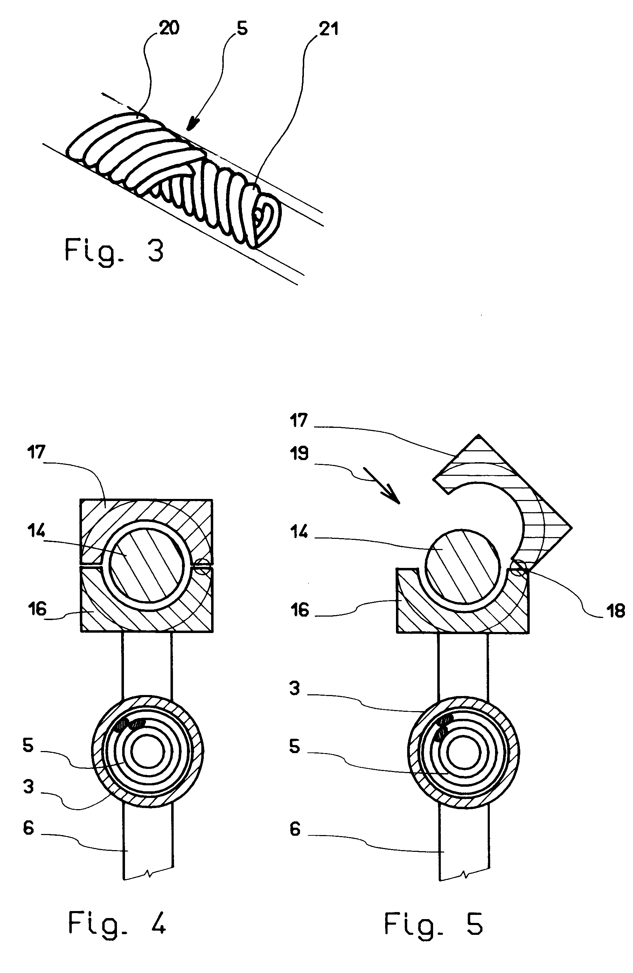

Comme le représentent en coupe transversale les figures 4 et 5, le guide-barre 1 comprend une demi-coquille inférieure 16 fixe, solidaire du bâti 6, et une demi-coquille supérieure 17 mobile par rapport à la demi-coquille inférieure 16. Par exemple, la demi-coquille supérieure 17 est articulée sur la demi-coquille inférieure 16 par une articulation longitudinale 18 autorisant son pivotement entre une position fermée représentée sur la figure 4 et une position ouverte représentée sur la figure 5. Dans la position fermée de la figure 4, les deux demi-coquilles 16 et 17 sont étroitement appliquées l'une contre l'autre pour former un tube creux à paroi latérale continue, comme le représente la figure. Par contre, en position ouverte de la figure 5, les deux demi-coquilles 16 et 17 sont écartées l'une de l'autre pour permettre l'accès latéral au creux intérieur des demi-coquilles, notamment pour l'introduction d'une barre 14 comme le montre la flèche 19.

Le guide-barre 1 peut être constitué d'un seul tronçon, faisant toute la longueur de l'embarreur, comme représenté sur les figures. Les chutes doivent alors être évacuées par l'avant. En alternative, le guide-barre 1 peut comprendre un tronçon antérieur et un tronçon postérieur, le tronçon postérieur pouvant avantageusement s'ouvrir vers le haut et vers le bas pour permettre à la fois l'introduction des barres par le dessus et l'éjection des chutes par le bas.

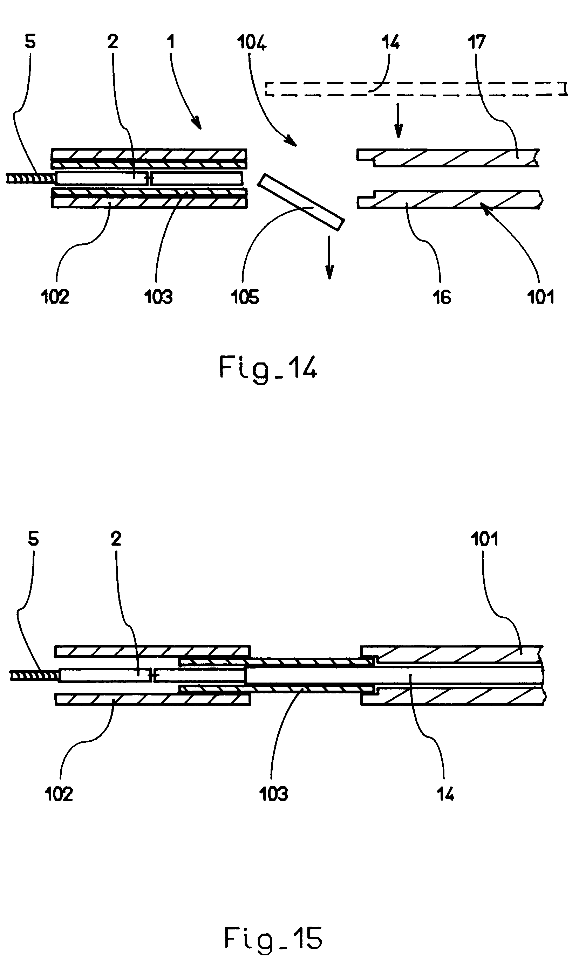

Dans le mode de réalisation représenté sur les figures 14 et 15, le guide-barre 1 est formé de la succession de trois tronçons, à savoir un tronçon antérieur 101, un tronçon postérieur 102, et un tronçon intermédiaire mobile 103. Le tronçon antérieur 101 est formé des deux demi-coquilles 16 et 17, comme dans le mode de réalisation des figures 4 et 5. Le tronçon postérieur 102 peut être un tube monobloc continu, de longueur supérieure à la longueur de la poussette 2.

Les trois tronçons successifs 101, 102 et 103 sont coaxiaux. Le tronçon intermédiaire mobile 103 coulisse axialement dans le tronçon postérieur 102, entre une position de retrait représentée sur la figure 14 dans laquelle il est entièrement logé à l'intérieur du tronçon postérieur 102, et une position déployée représentée sur la figure 15 dans laquelle il relie le tronçon postérieur 102 et le tronçon antérieur 101 pour assurer la continuité de guidage de la poussette 2, du câble 5 et de la barre 14.

Le tronçon intermédiaire mobile 103 est déplacé entre ses deux positions de retrait et déployée par des moyens d'entraînement de tronçon intermédiaire mobile, non représentés sur les figures. On peut, par exemple, prévoir un levier en prise sur le tronçon intermédiaire 103, dans l'intervalle 104 entre les tronçons antérieur 101 et postérieur 102, et actionné par une came.

L'intervalle 104 prévu entre le tronçon antérieur 101 et le tronçon postérieur 102 est de longueur inférieure à la longueur du tronçon postérieur 102, mais de longueur adaptée pour l'évacuation des chutes 105 de barre après l'usinage. Comme le représente la figure 14, une nouvelle barre 14 peut être introduite dans l'embarreur après éjection de la chute 105, l'extrémité postérieure de la barre 14 étant ensuite insérée dans la pince de la poussette 2.

Dans le mode de réalisation représenté sur la figure 3, le câble 5 est constitué d'au moins deux gaines coaxiales 20 et 21 formées chacune d'un enroulement hélicoïdal de fil métallique à spires jointives, les enroulements respectifs des deux gaines étant à pas inversés l'un par rapport à l'autre. On réalise ainsi un câble suffisamment flexible, peu abrasif par sa face extérieure, et capable de transmettre des efforts de compression axiale sans déformation axiale sensible. La portion de câble située entre la poussette et les moyens d'entraînement 4 ne présente ainsi pas de déformations axiales sensibles sous l'effort. Pour former les gaines 20 et 21, on peut avantageusement utiliser un fil métallique de diamètre compris entre 0,3 et 0,6 millimètres. Un tel mode de réalisation permet de contrôler la position de la poussette par la seule rotation des moyens d'entraînement 4.

Toutefois, pour les applications dans lesquelles la position de la poussette peut être contrôlée par des moyens autres que les moyens d'entraînement 4 du câble, on peut utiliser d'autres structures connues de câble 5.

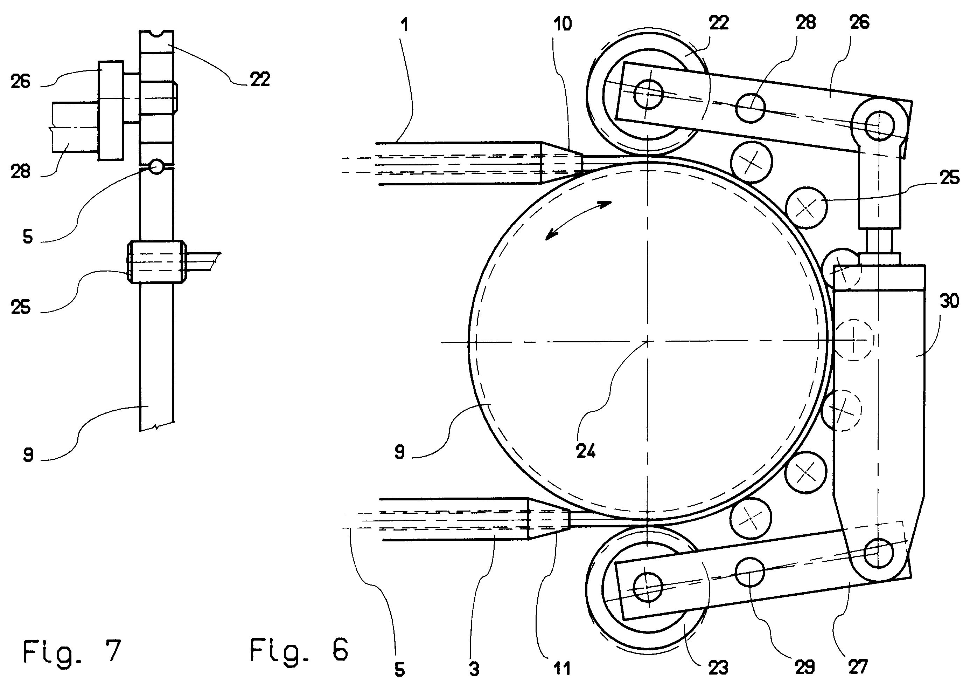

Dans le mode de réalisation représenté sur figures 6 et 7, les moyens d'entraînement 4 comprennent la poulie 9 de renvoi, disposée à proximité des extrémités respectives 10 et 11 du guide-barre 1 et du tube guide câble de réserve 3. La poulie 9 comprend une gorge dont la section est sensiblement égale à la demi-section du câble 5. Le câble 5 est maintenu à la périphérie de la poulie 9 par des galets presseurs et de guidage entre lesquels passe le câble 5 formant une demi-boucle entre les extrémités respectives 10 et 11 du guide-barre 1 et du tube guide câble de réserve 3.

Dans ce mode de réalisation représenté, le câble est maintenu par deux galets presseurs 22 et 23 diamétralement opposés par rapport à l'axe de rotation 24 de la poulie 9, et disposés respectivement à proximité de l'extrémité 10 du guide-barre 1 et de l'extrémité 11 du tube guide câble de réserve 3. Le câble est également tenu par une série de galets de guidage tels que le galet 25, répartis à la périphérie de la poulie 9 dans la demi-circonférence de poulie la plus éloignée des tubes guide-barre 1 et guide câble de réserve 3, entre les deux galets presseurs 22 et 23. Les galets de guidage 25 sont légèrement écartés de la périphérie de la poulie 9, pour laisser un libre passage à faible frottement du câble 5 entre la poulie 9 et les galets 25.

Les galets de guidage 25 sont montés libres en rotation sur leurs axes respectifs.

Les galets presseurs 22 et 23 sont montés rotatifs sur des arbres portés par deux leviers respectifs 26 et 27. Les leviers 26 et 27 pivotent respectivement autour de deux axes respectifs 28 et 29 parallèles à l'axe 24 de la poulie, et sont sollicités par un vérin 30 et des moyens de commande de vérin 31 schématiquement représentés sur la figure 1. Naturellement, le vérin 30 peut être remplacé par tout moyen actionneur équivalent. Par actionnement du vérin 30, les galets presseurs 22 et 23 sont déplacés entre deux positions respectives : (a) une position rapprochée d'entraînement représentée en traits pleins sur la figure 6, dans laquelle ils pincent le câble 5 radialement contre la périphérie de la poulie 9 pour empêcher tout glissement du câble par rapport à la poulie, de sorte que la rotation de la poulie détermine les mouvements de la poussette 2 et de la barre 14 ; (b) une position retirée représentée en traits mixtes sur la figure 6, dans laquelle ils restent à proximité de la poulie de renvoi 9 pour assurer le guidage du câble 5 tout en permettant le glissement du câble entre les galets et la poulie. Dans cette seconde position retirée, la broche de tour détermine la position axiale de la barre 14, de la poussette 2 et du câble 5.

La poulie de renvoi 9 est entraînée en rotation par des moyens moteurs, par exemple par un moteur électrique 32, par l'intermédiaire d'un coupleur à hystérésis 33, ou est entraînée par un moteur couple ou tout autre moyen.

La poulie 9 et les galets presseurs 22 et 23 sont avantageusement en produit connu sous la marque CELORON, en polyamide, en caoutchouc ou en toute autre matière présentant une bonne adhérence sur le câble 5 pour assurer son entraînement.

Le fonctionnement du dispositif est le suivant :
- au cours d'une première étape, la poussette 2 est initialement en position de retrait maximum, au voisinage de l'extrémité 10 du guide-barre 1 ; on introduit une barre 14 comme le représente la flèche 19 de la figure 5, dans l'espace creux défini par les demi-coquilles 16 et 17 en position ouverte, et on referme la demi-coquille supérieure 17 sur la demi-coquille inférieure 16 comme le représente la figure 4 ; on introduit l'extrémité postérieure de la barre 14 dans la pince de seconde partie 13 de poussette.
- Au cours d'une seconde étape, on pousse la poussette 2 pour repousser la barre 14 en butée sur l'outil de coupe du tour automatique. Pour cela, les galets presseurs 22 et 23 sont pressés contre le câble 5 par le vérin 30, de sorte que la rotation de la poulie 9 entraînée par le moteur 32 provoque la translation du câble 5 et de la poussette 2 vers l'avant.
- Au cours d'une troisième étape, on débraye les galets presseurs 22 et 23, par actionnement du vérin pneumatique 30, pour les ramener en position écartée et permettre le glissement du câble 5 entre les galets presseurs 22 et 23 et la poulie 9. L'avance et le recul de la barre 14 sont alors assurés par la poupée mobile du tour automatique, l'extrémité de la barre 14 étant maintenue dans la broche du tour.
- Au cours d'une quatrième étape, les galets presseurs 22 et 23 sont à nouveau pressés contre le câble 5, et la poulie 9 est actionnée en sens inverse pour provoquer le recul de la poussette 2 et de la chute de barre 14 qui lui reste accrochée, la chute étant la partie de barre 14 proche de son extrémité postérieure et qui ne peut pas être usinée.
- Au cours d'une cinquième étape, on sépare la chute et la poussette 2, et l'on éjecte la chute, de manière connue en soi.
- La demi-coquille supérieure 17 peut alors être soulevée pour permettre l'introduction ultérieure d'une nouvelle barre 14, et le cycle peut recommencer.

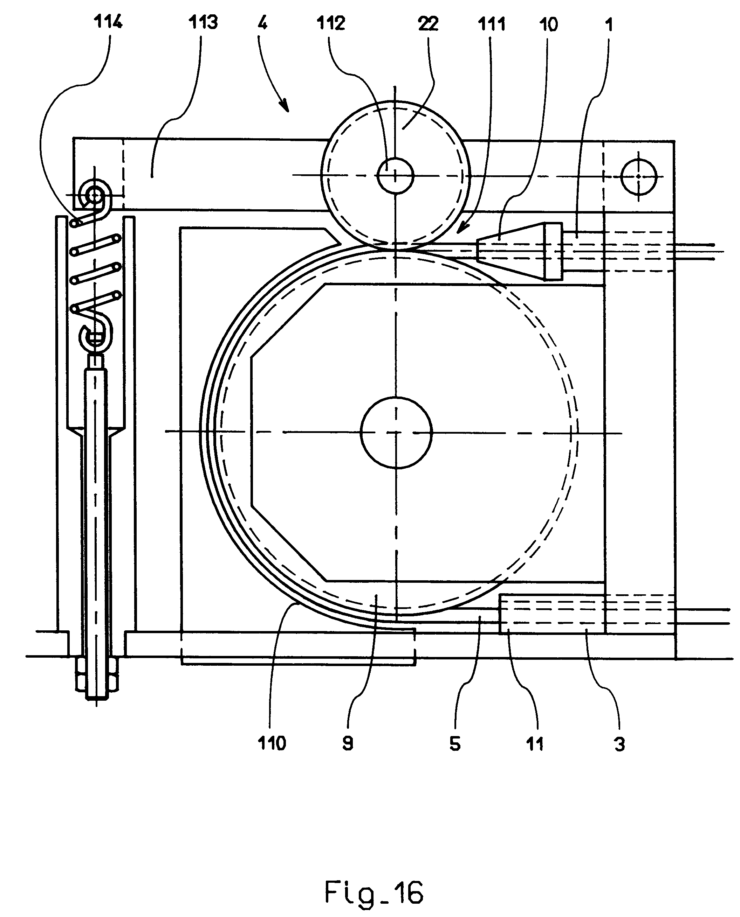

La figure 16 illustre un autre mode de réalisation des moyens d'entraînement 4 du câble. Dans ce mode de réalisation, la poulie de renvoi 9 est entraînée en rotation par les mêmes moyens moteurs 32 et 33 non représentés sur la figure. Une goulotte de guidage postérieure 110 guide le câble 5 selon la périphérie de la poulie de renvoi 9 entre l'extrémité postérieure 11 du guide câble de réserve 3 et un intervalle libre supérieur 111 adjacent à l'extrémité postérieure 10 du guide-barre 1.

Un galet presseur 22 est disposé dans ledit intervalle libre 111 supérieur, et est monté libre en rotation sur un arbre transversal 112 porté par un levier 113 pivotant sollicité par un ressort 114 pour appliquer le galet presseur 22 en appui contre le câble 5 et pour presser ainsi le câble 5 contre la poulie de renvoi 9.

Lors des étapes d'usinage au cours desquelles la barre est entraînée en translation axiale par la poupée du tour, les moyens moteur 32 et 33 produisent sur la poulie de renvoi 9 un faible couple d'entraînement dans le sens de l'effort exercé par la poupée, le couple ayant une valeur adaptée pour compenser les forces de frottement axial du câble 5 et de la barre.

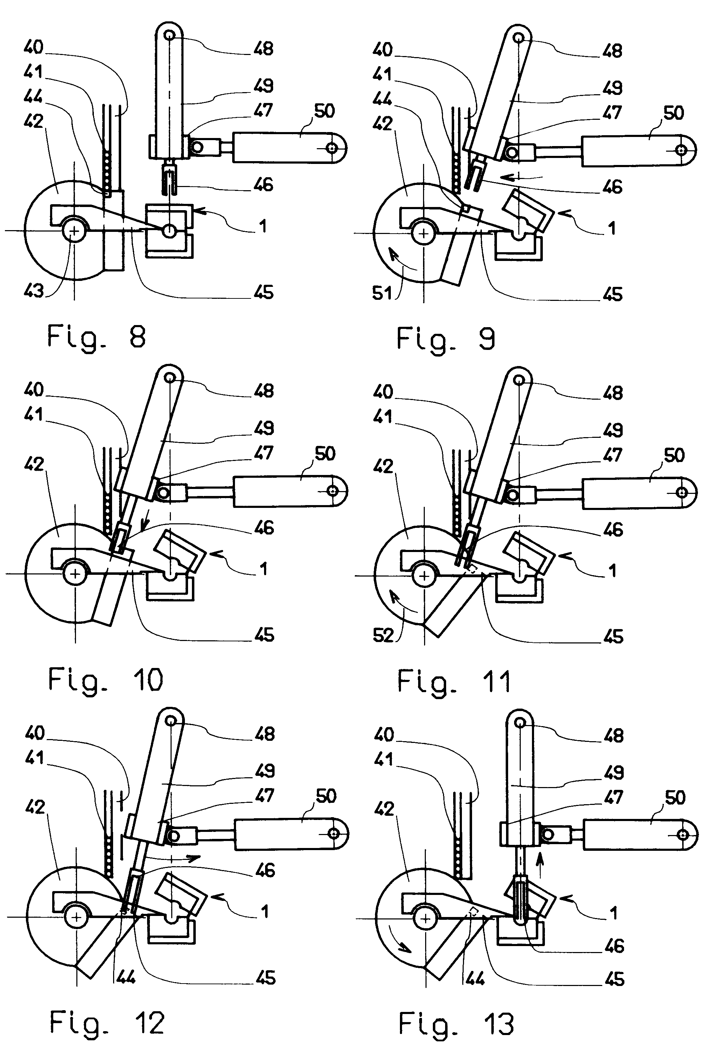

Dans le mode de réalisation illustré par les figures 8 à 13, l'embarreur selon l'invention comprend en outre un dispositif de sélection et d'alimentation en barres, permettant d'alimenter de façon fiable le guide-barre avec des barres de petit diamètre. Naturellement, le dispositif de sélection et d'alimentation en barres peut également fonctionner correctement avec des barres de plus gros diamètre.

Comme le représentent les figures, le dispositif de sélection et d'alimentation en barres comprend un magasin 40 conformé pour contenir une pile de barres 41 rangées les unes sur les autres en une rangée verticale de barres sensiblement horizontales. Le magasin 40 occupe toute la longueur de l'embarreur, pour assurer le maintien de la pile de barres selon toute leur longueur. L'extrémité supérieure du magasin est ouverte, pour l'introduction des barres par l'opérateur dans le magasin. L'extrémité inférieure du magasin 40 est également ouverte pour la sortie des barres.

Un sélectionneur à cames comprend une série de cames telles que la came 42, à axe longitudinal 43, réparties sur la longueur de l'embarreur. Les cames telles que la came 42 obturent la sortie inférieure du magasin 40, et comportent une gorge périphérique longitudinale 44. La gorge périphérique longitudinale 44 peut contenir une seule barre, son diamètre étant trop réduit pour contenir deux barres simultanément.

Des rampes de guidage 45 inclinées conduisent les barres depuis les cames 42 jusqu'au guide-barre 1. Les cames 42 sont adaptées pour sélectionner une barre et l'amener sur les rampes de guidage 45. De même que les cames 42, les rampes de guidage 45 comportent plusieurs rampes réparties sur la longueur de l'embarreur.

Des fourchettes d'entraînement de barres 46 sont montées à coulissement axial sur un support 47 lui-même pivotant selon un axe 48 parallèle à l'axe de l'embarreur. Un premier vérin de fourchette 49 commande le déplacement axial de la fourchette 46. Un second vérin de fourchette 50 commande le pivotement du support 47 autour de l'axe 48.

Le fonctionnement de ce dispositif de sélection et d'alimentation en barres et le suivant :
- sur la figure 8, le dispositif est à l'état de repos. La came 42 est dans la position telle que la gorge 44 est au-dessous de la sortie du magasin 40, une barre étant engagée dans la gorge 44. La fourchette 46 est à l'écart des rampes de guidage.
- Sur la figure 9, la came 42 est pivotée dans le sens de la flèche 51, pour amener sa gorge 44 en affleurement de la rampe 45, maintenant une barre dans cette position. Le second vérin de fourchette 50 est actionné pour déplacer la fourchette 46 et l'amener au regard de la barre ainsi positionnée dans la gorge 44.
- Sur la figure 10, le premier vérin de fourchette 49 est actionné pour avancer la fourchette 46 qui vient emprisonner la barre comme le représente la figure. Le guide-barre 1 est ouvert.
- Sur la figure 11, la came 42 est à nouveau pivotée dans le sens de la flèche 52. La barre se trouve alors retenue par la rampe de guidage 45 et la fourchette 46.
- Sur la figure 12, on actionne le second vérin de fourchette 50 pour déplacer la fourchette 46 en direction du guide-barre 1, entraînant une barre qui reste en appui sur la rampe 45.
- Sur la figure 13, la fourchette 46 se trouve au regard du logement de guide-barre 1, et libère alors la barre dans ce logement. L'actionnement du premier vérin de fourchette 49 provoque la remontée de la fourchette 46 vers la position de repos de la figure 8.

Ainsi, la fourchette 46 est un moyen d'entraînement de barre pouvant admettre plusieurs positions successives :
. une position de repos à l'écart des rampes de guidage,
. une position de prise pour venir emprisonner la barre à sa sortie des cames 42 sur l'entrée des rampes de guidage 45,
. des positions successives de déplacement le long des rampes de guidage 45 pour piloter le déplacement de la barre,
. une position d'éjection au regard du logement de guide-barre 1 pour relâcher une barre dans le logement du guide-barre.

On comprendra qu'une telle structure de dispositif de sélection et d'alimentation en barres peut être utilisée non seulement avec une structure de guide-barre précédemment décrite, mais également avec toute autre structure de guide-barre comportant des moyens d'entraînement différents.

La présente invention n'est pas limitée aux modes de réalisation qui ont été explicitement décrits, mais elle en inclut les diverses variantes et généralisations contenues dans le domaine des revendications ci-après.

## Revendications

**1 -** Embarreur pour tour automatique, comprenant :
- un guide-barre (1) formé d'une première demi-coquille (16) et d'une deuxième demi-coquille (17) mobiles l'une par rapport à l'autre entre deux positions, une position fermée dans laquelle les deux demi-coquilles sont rapprochées l'une vers l'autre pour former un guide tubulaire creux ouvert aux deux extrémités, et une position ouverte dans laquelle les demi-coquilles (16, 17) sont écartées l'une de l'autre pour permettre l'introduction latérale (19) d'une barre (14) dans le creux intérieur des demi-coquilles,
- une poussette (2) montée à coulissement dans le creux intérieur du guide-barre (1) et sollicitée par des moyens mécaniques d'avance-barre, permettant d'exercer une pression axiale sur l'arrière d'une barre (14) introduite dans le guide-barre (1), pour pousser la barre (14) en direction de la poupée de tour pour introduire son extrémité antérieure dans la broche de tour,
caractérisé en ce que :
- en position fermée, les deux demi-coquilles (16, 17) sont étroitement appliquées l'une contre l'autre pour former un tube creux à paroi latérale continue, de longueur suffisante pour contenir sensiblement toute la barre (14),
- les moyens mécaniques d'avance barre comprennent un câble flexible (5) dont une première extrémité (7) est montée à coulissement axial dans le creux du guide-barre (1) et est fixée à la poussette (2),
- la deuxième extrémité du câble (8) coulisse axialement dans un tube guide câble de réserve (3),
- une portion intermédiaire du câble (5) est entraînée axialement par des moyens d'entraînement (4), au voisinage de l'extrémité arrière (10) du guide-barre (1) opposée à la poupée de tour, entre ladite extrémité arrière (10) de guide-barre et l'extrémité (11) du tube guide câble de réserve (3).

**2 -** Embarreur selon la revendication 1, caractérisé en ce que :
- les moyens d'entraînement (4) comprennent une poulie de renvoi (9), au moins un galet presseur (22, 23) et des moyens de guidage (25) entre lesquels passe le câble (5) formant une demi-boucle entre les extrémités respectives (10, 11) du guide-barre (1) et du tube guide câble de réserve (3),
- des moyens moteurs (32, 33) entraînent en rotation la poulie de renvoi (9) et/ou les galets presseurs (22, 23) pour solliciter le câble (5) et actionner la poussette (2).

**3 -** Embarreur selon la revendication 2, caractérisé en ce que :
- la poulie de renvoi (9) est entraînée en rotation par les moyens moteurs (32, 33),
- deux galets presseurs (22, 23) sont diamétralement opposés par rapport à l'axe de rotation (24) de la poulie (9), et sont disposés à proximité des extrémités respectives (10, 11) du guide-barre (1) et du guide câble de réserve (3),
- les galets presseurs (22, 23) sont montés libres en rotation sur des arbres portés par deux leviers respectifs (26, 27) montés pivotants autour d'axes respectifs (28, 29) parallèles à l'axe de la poulie (24) et sollicités par un vérin (30) et des moyens de commande de vérin (31), l'actionnement du vérin (30) permettant de déplacer les galets presseurs (22, 23) entre une position rapprochée dans laquelle ils pincent le câble (5) radialement contre la poulie de renvoi (9) pour assurer l'entraînement du câble (5) et de la poussette (2) et une position retirée dans laquelle ils restent à proximité de la poulie de renvoi (9) pour assurer le guidage du câble tout en permettant le glissement du câble (5) entre les galets (22, 23) et la poulie (9), de sorte que dans la position retirée des galets presseurs la broche de tour détermine la position axiale de la barre (14), de la poussette (2) et du câble (5).

**4 -** Embarreur selon la revendication 2, caractérisé en ce que :
- la poulie de renvoi (9) est entraînée en rotation par les moyens moteurs (32, 33),
- une goulotte de guidage (110) postérieure guide le câble (5) selon la périphérie de la poulie de renvoi (9) entre l'extrémité postérieure (11) du guide-câble de réserve (3) et un intervalle libre supérieur (111) adjacent à l'extrémité postérieure (10) du guide-barre (1),
- un galet presseur (22) est disposé dans ledit intervalle libre (111) supérieur, monté libre en rotation sur un arbre (112) transversal porté par un levier (113) pivotant sollicité par un ressort (114) pour appliquer le galet presseur (22) en appui contre le câble (5) et pour presser ainsi le câble (5) contre la poulie de renvoi (9).

**5 -** Embarreur selon l'une des revendications 2 ou 4, caractérisé en ce que, lors des étapes d'usinage dans lesquelles la barre est entraînée en translation axiale par la poupée du tour, les moyens moteurs (32, 33) produisent sur la poulie de renvoi (9) un faible couple d'entraînement dans le sens de l'effort produit par la poupée, de valeur adaptée pour compenser les forces de frottement axial du câble (5) et de la barre.

**6 -** Embarreur selon l'une quelconque des revendications 2 à 5, caractérisé en ce que la poulie (9) et les galets presseurs (22, 23) sont en CELORON.

**7 -** Embarreur selon l'une quelconque des revendications 1 à 6, caractérisé en ce que :
- les deux demi-coquilles (16, 17) forment un tronçon antérieur (101) de guide-barre,
- ledit tronçon antérieur (101) de guide-barre est prolongé vers l'arrière par un tronçon postérieur (102) de longueur supérieure à la longueur de la poussette (2), séparé du tronçon antérieur (101) par un intervalle (104) de longueur adaptée pour l'évacuation des chutes (105),
- un tronçon intermédiaire (103) mobile, sollicité par des moyens d'entraînement de tronçon intermédiaire mobile, coulisse axialement dans le tronçon postérieur (102) entre une position de retrait dans laquelle il est entièrement logé à l'intérieur du tronçon postérieur (102) et une position déployée dans laquelle il relie le tronçon postérieur (102) et le tronçon antérieur (101) pour assurer la continuité de guidage de la poussette (2), de la barre (14) et du câble (5).

**8 -** Embarreur selon l'une quelconque des revendications 1 à 7, caractérisé en ce que le câble (5) est constitué d'au moins deux gaines coaxiales (20, 21) formées chacune d'un enroulement hélicoïdal de fil métallique à spires jointives, les enroulements respectifs des deux gaines (20, 21) étant à pas inversés l'un par rapport à l'autre.

**9 -** Embarreur selon l'une quelconque des revendications 1 à 8, caractérisé en ce qu'il comprend un dispositif de sélection et d'alimentation en barres, comportant :
- un magasin (40) conformé pour contenir une pile de barres (41) rangées les unes sur les autres en une rangée verticale de barres sensiblement horizontales,
- un sélectionneur à cames comportant une série de cames (42) à axe longitudinal (43) réparties sur la longueur de l'embarreur et obturant la sortie inférieure du magasin (40), les cames comportant une gorge périphérique longitudinale (44) pouvant contenir une seule barre,
- des rampes de guidage (45) inclinées conduisant les barres depuis les cames (42) jusqu'au guide-barre (1), les cames (42) étant adaptées pour sélectionner une barre et l'amener sur les rampes de guidage (45),
- des moyens d'entraînement de barre (46), déplaçables entre :
. une position de repos à l'écart des rampes de guidage (45),
. une position de prise pour venir emprisonner une barre à sa sortie des cames (42) sur l'entrée des rampes de guidage (45),
. des positions successives de déplacement le long des rampes de guidage (45) pour piloter le déplacement de la barre,
. une position d'éjection au regard du logement de guide-barre (1) pour relâcher une barre dans son logement.

**10 -** Embarreur selon la revendication 9, caractérisé en ce que les moyens d'entraînement de barre comprennent des fourchettes d'entraînement (46) de barre montées à coulissement axial sur un support (47) lui-même pivotant selon un axe (48) parallèle à l'axe de l'embarreur, un premier vérin de fourchette (49) commandant le déplacement axial de fourchette (46), un second vérin de fourchette (50) commandant le pivotement dudit support (47).
